# EUROPEAN PATENT SPECIFICATION

(11) **EP 1 753 055 B1**
(45) Date of publication and mention of the grant of the patent: **22.03.2017**
(21) Application number: 04731836.5
(22) Date of filing: 09.05.2004
(51) Int. Cl.: H01M 2/36, H01M 10/48

(54) **BATTERY WATERING DEVICE**
BATTERIE-BEWÄSSERUNGSEINRICHTUNG
DISPOSITIF D'ALIMENTATION EN EAU DE BATTERIE

(43) Date of publication of application: 14.02.2007
(73) Proprietor: Li, Yun, Macau (CN); Poon, Lock Kee Rocky, Macau (CN)
(72) Inventor: Li, Yun, Macau (CN); Poon, Lock Kee Rocky, Macau (CN)
(74) Representative: Karlsson, Leif Gunnar Börje
(86) International application number: PCT/CN2004/000461
(87) International publication number: WO 2005/109547

(56) References cited:
- EP-A- 0 855 634
- EP-A1- 1 090 434
- DE-A1- 4 412 068
- DE-A1- 4 412 068
- JP-A- 55 163 767
- US-A- 4 522 896
- US-A- 5 453 334
- US-A- 5 453 334
- US-A1- 2003 102 029

## Description

### Technical Field

The invention relates to a water-filling device for a storage battery, and particularly to a sealed water-f illing device which has an electrolyte level sensor and a controller for automatically filling water into a storage battery.

### Background Art

A lifetime of storage battery depends on a lifetime of polar plates and electrolyte. Normally, the lifetime of polar plates is about 15-25 years, and a maintenance period of the electrolyte is about 3-5 years. Thus, deterioration of the electrolyte is the major obstacle to the life time of a storage battery. When a storage battery is used, the electrolyte becomes deteriorated due to the following changes:
1) evaporation of water in the electrolyte;
2) water loss of the electrolyte in the storage battery due to chemical reactions in charging and discharging cycles;
3) in a conventional configuration of a storage battery, a balancing hole (also functioning as a vent hole) is used to balance the pressure inside and outside of the storage battery, however, the electrolyte contacts and reacts with the carbon dioxide in the atmosphere through the balancing hole, and forms the product potassium carbonate, which leads to a lowered activity (or even a loss of chemical activity) of the electrolyte.

To solve the problem of water loss in the electrolyte of a storage battery, some devices for water filling have been proposed for storage batteries. For instance, GB patent No.1378622 teaches a water- filling device for a storage battery, in which an electrolyte level in each of the storage batteries is maintained at almost the same height by an internal pressure of the storage batteries when injecting water. However, such a water-filling device needs to start or stop water injection manually, and the electrolyte level in the storage battery must be judged by a visual observation. Thereby, a maintenance-free operation of the storage battery is impossible.

Chinese patent No. 99601462.1 teaches a water recombination system which could be used in a storage battery for water filling. The water recombination system comprises a recombination chamber containing a recombination catalyst, and is coupled to a storage battery. The hydrogen and oxygen produced in the storage battery are catalytically recombined into water in the recombination chamber. The product water flows back into the storage battery, so that a rate of water loss is decreased. However, since the recombination catalyst is made of noble metals, such a recombination system is expensive. Even if a recombination efficiency reaches 100% , only the water lost in the charging and discharging cycles is compensated. On the other hand, the water lost by evaporation would not be compensated, though this is a considerable aspect of water loss during a long-therm operation.

Similar devices are also disclosed in DE 4412068 A1, relating to a system for supplying electrolyte to storage battery(ies) and in US 5453334 A1 relating to a battery watering system using a plurality of cells and modules. In both these disclosures a pump is required to water the battery or supply electrolyte to the battery.

Moreover, the prior art water-filling device has not solved the problem of a gradual deterioration of the electrolyte due to a reaction with the carbon dioxide in the atmosphere. Thus, during a long-term operation of storage battery, new chemical agent should be added to the electrolyte which is lost due to the reaction, though the number of filling water is decreased. Thereby, a maintenance-free operation of the storage battery is still difficult. Furthermore, the above devices do not remove the product of the reaction, which has an adverse effect on an activity of the newly-added chemical agent. On the other hand, if a chemical agent is inappropriately added to the electrolyte, the storage battery will be likely damaged.

### Contents of the Invention

The invention is related to a water filling device for a battery according to claim 1.

One object of the invention is to provide a device for automatic filling water into a storage battery.

Another object of the invention is to provide a device in a storage battery to isolate the storage battery from the atmosphere.

According to the invention, a water-filling device for a storage battery comprises a water tank containing water to be supplied to the storage battery, said water tank communicating with an interior of the storage battery; an electromagnetic valve disposed in a path of water injection; an electrolyte level sensor disposed in the storage battery; a controller for processing detected signals of the electrolyte level sensor so as to control an open or a close of the electromagnetic valve, wherein when the electrolyte level detector detects that the electrolyte level is lower than a lower limit, the controller turns the electromagnetic valve on so as to inject water into the storage battery, and after the electrolyte level sensor detects that the electrolyte level is higher than an upper limit, the controller turns the electromagnetic valve off so as to stop injecting water.

According to another aspect of the invention, the device comprises a one-way valve connected to a vent tube of the storage battery, by which a product gas in the storage battery could be discharged to the atmosphere, but the air could not enter into the storage battery.

The present water-filling device could automatically fill water into various storage batteries using electrolyte. By presetting an amount of water in the water tank, a damage of the storage battery due to an excessive loss of water could be avoided in the lifetime. Moreover, since there is no contact between the electrolyte and the air, a consumption rate of the electrolyte could be slowed down. Thus, a lifetime of the storage battery will be improved, or a maintenance-free operation of the storage battery in the whole lifetime is possible. Such a device is very useful for using in a solar power generating system because the burden for maintenance is reduced.

### Brief Description of the Drawings

Fig. 1 is a schematic diagram showing a water-filling device for storage batteries according to the invention.
Fig. 2 is a circuit diagram of the control circuit used in the water-filling device for storage batteries of Fig. 1.

### Detailed Description of the Invention

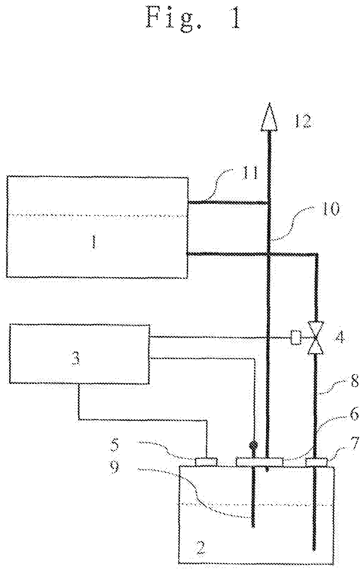

Fig. 1 is a schematic diagram showing a water-filling device for storage batteries according to the invention. A water tank 1 contains in advance water with an amount sufficient to compensate the water lost in the lifetime of the storage battery with the water in the water tank. An upper port (not shown) for connecting to an air tube 11 is disposed at an upper portion of the water tank (above a presetting water level, as indicated by a broken line in the water tank 1 in Fig. 1), and a lower port (not shown) for connecting to a water tube 8 is disposed at a lower portion of the water-supply tank (below the presetting water level).

A vent tube 10 is disposed in a lid 6 covering a balancing hole for balancing pressure inside and outside of the storage battery 2. The vent tube 10 communicates with the atmosphere via a one-way valve 12, so that a product gas as a result of the reaction in the storage battery could be discharged to the atmosphere to avoid a damage of the storage battery due to a high internal pressure. Meanwhile, the storage battery is isolated from the air to avoid a deterioration of the electrolyte due to a reaction with the air. The vent tube 10 communicates with the air tube 11, so as to keep a balance of pressure in the water tank 1 and the storage battery 2, and thus the water in the water tank could flow into the storage battery.

Although an interior of the water tank and that of the storage battery are communicated with each other for air flow, the water tank is sealed after the water is injected into it in advance. Consequently, the storage battery could not communicate with the air in the atmosphere via the water tank, which provides isolation between the storage battery and the air.

A lid 7 covers a water-injection hole of the storage battery. A water-injection tube 8 is inserted into the lid and into an interior of the storage battery 1, and reaches a bottom of the storage battery (below the working level as indicated by the broken line in the storage battery 2 in Fig. 1). As discussed above, because the pressure in the water tank 1 and that in the storage battery 2 are balanced, the water in the water tank could flow into the storage battery due to a gravitational force. An electromagnetic valve 4 is disposed in the path of the water-injection tube 8 between the water tank 1 and the storage battery 2 to execute a water-injection operation.

An open state or a close state of the electromagnetic valve 4 is controlled by a controller 3. The controller is connected to the positive and negative electrodes of the storage batteries by wirings (denoted by reference numeral 5 in Fig. 1), so that the electric power is supplied from the storage batteries themselves.

A liquid level sensor 9, which is used to detect an upper limit and a lower limit of the electrolyte level in the storage batteries, is also disposed in the lid covering the balancing hole. In a normal state that the water is not injected into the storage batteries (i.e., the electrolyte level has a height as indicated by the broken line in the storage batteries 2, as shown in Fig. 1), the electrolyte level detector 9 determines that the electrolyte level is within a range between the lower limit and the upper limit. When a detected signal shows that the amount of water loss in the storage batteries is beyond a prescribed value, i.e. the electrolyte level detector 9 detects that the electrolyte level is lower than the lower limit, the controller 3 turns the electromagnetic valve 4 on so as to inject water into the storage batteries. After a sufficient amount of water has been injected, i.e. the electrolyte level sensor 9 detects that the electrolyte level is higher than the upper limit, the controller 3 turns the electromagnetic valve 4 so as to stop injecting water.

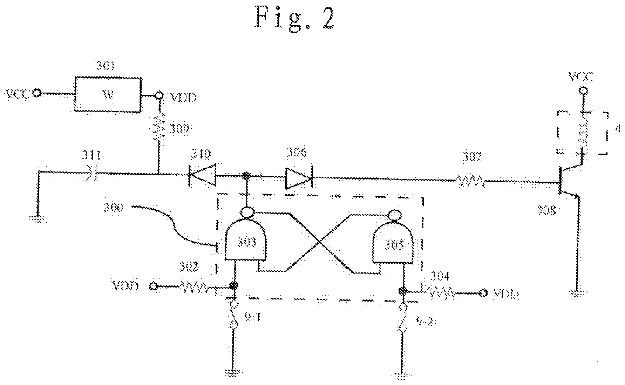

Fig. 2 is a circuit diagram of the control circuit used in the water-filling device for storage batteries of Fig. 1.A power source VCC of 12 V, supplied from the storage batteries, is converted to a stable VDD of 8V by a voltage regulator 301. The voltage is supplied to a RS flip-flop 300 comprised of two NAND gates 303, 305. The controller also include a startup reset circuit comprised of a resistor 309, a diode 310 and a capacitor 311, so as to set an output of the RS flip-flop to a low potential at the startup.

The electrolyte level sensor 9 is shown as two switches 9-1 and 9-2 in Fig. 2, indicating the upper limit and the lower limit of the electrolyte level, respectively. For instance, the electrolyte level sensor 9 may comprise a floater in the electrolyte solution. When the electrolyte level is decreased to be lower than the lower limit, the floater will activate the corresponding switch 9-1. Similarly, when the electrolyte level is increased to be higher than the upper limit, the floater will activate the corresponding switch 9-2

In a normal state that no supplement of water is needed, both switches 9-1 and 9-2 are open. Since the startup reset circuit sets an output of the flip-flop 300 at a low potential at the startup, the flip-flop outputs a low potential and turn the electromagnetic valve 4 off. When the electrolyte level is decreased due to the water loss in the storage battery and the floater reaches the position corresponding to the lower limit switch, the switch 9-1 will be closed, while the switch 9-2 is still in an open state. Thus, the flip-flop 300 outputs a high potential. The high potential is supplied to a driving transistor 308 via a rectifying diode 306 and a current-limiting resistor 307, so that the driving transistor 308 is in a conductive state and activates the electromagnetic valve to inject water. When the electrolyte level is increased, the switch 9-1 will be in an open state, and the switch 9-2 will be also inanopenstate. Thus, the flip-flop 300 retains a high potential and continues injecting water. When the floater reaches a position corresponding to the upper limit switch, the switch 9-2 will be closed, the flip-flop outputs a low potential and the driving transistor 308 will be in a nonconductive state, so that the electromagnetic valve is turned off to stop water injection. Thus, by using of the above controller, the electrolyte level in the storage batteries 2 is within the range between the lower limit and the upper limit determined by the electrolyte level sensor 9.

As a variation of the above embodiment, the water-injection tube 8, the electrolyte level sensor 9 and the vent tube 10 are disposed in the same lid, for example in the lid 7 covering the water-injection hole. With only one hole (i.e. water-injection hole) into the storage battery, the invention could be applied to a conventional storage battery having only one water-injection hole, and the vent hole is disposed in a lid covering the water-injection hole.

In an embodiment of the invention, the water-filling device and the storage battery are sealed to form a storage battery assembly. Since the controller in the water-filling device is powered by the storage battery itself, the storage battery assembly could work independently, without the need of an external power source.

In another embodiment, the invention comprises a stack of many storage batteries, each of which is provide with a water tank, a controller, an electrolyte level sensor, and a water-injection tube.

As a variation of the above embodiment, the invention comprises a stack of many storage batteries, each of which is provided with an electrolyte level detector and a water-inj ection tube, but all of which have a common water tank, and a common controller, so that the cost is further decreased.

It could be understood that the invention requires no change of the internal structure of a storage battery. Awater-inj ection tube, an electrolyte level sensor and a vent tube could be disposed in a lid covering a balancing hole or a water injection hole, or be disposed in the lids covering both two holes of a conventional storage battery. That is, the invention could be easily applied to a conventional storage battery.

Although the present invention has been described with reference to preferred embodiments, those skilled in the art will recognize that the invention could be applied in various forms, and various changes, variations, modifications may be made without departing from the scope of the invention. Therefore, the described embodiments are to be considered in all respects only as illustrative and not restrictive.

## Claims

1. A storage battery assembly comprising:
a storage battery (2), and
a water-filling device for a storage battery comprising:
a water tank (1)containing a preset amount of water to be supplied to the storage battery, said water tank communicating with an interior of the storage battery through a path of water injection;
an electromagnetic valve (4) disposed in the path of water injection;
an electrolyte level sensor (9) disposed in the storage battery;
a controller (3) for processing detected signals of the electrolyte level sensor so as to control the electromagnetic valve to turn on or turn off,
wherein when the electrolyte level detector detects that the electrolyte level is lower than a lower limit, the controller turns the electromagnetic valve on so as to inject water into the storage battery, and when the electrolyte level sensor detects that the electrolyte level is higher than an upper limit, the controller turns the electromagnetic valve off so as to stop injecting water, and
wherein pressure in the water tank and pressure in the storage battery are balanced so that the water in the water tank is adaptable to flow into the storage battery due to gravitational force in the case that the electromagnetic valve is turned on,
wherein the storage battery assembly is sealed from outside atmosphere.

2. The storage battery assembly according to claim 1, wherein the path of water injection comprises a water-injection tube inserted into the storage battery.

3. The storage battery assembly according to claim 2, wherein the storage battery is a stack of a plurality of storage batteries, each of which is provide with a water tank, a controller, an electrolyte level sensor, and a water-injection tube.

4. The storage battery assembly according to claim 2, wherein the storage battery is a stack of a plurality of storage batteries, each of which is provide with an electrolyte level sensor and a water-injection tube, but all of which have a common water tank, and a common controller.

5. The storage battery assembly according to claim 1, further comprising a vent tub disposed in the storage battery and a one-way valve (12) so as to discharge the product gas from the storage battery to the atmosphere via the vent tub and the one-way valve.

6. The storage battery assembly according to claim 5, wherein the water-injection tube, the vent tube and the electrolyte level sensor are disposed in the same lid covering a hole of the storage battery.

7. The storage battery assembly according to claim 5, wherein the water-injection tube, the vent tube and the electrolyte level sensor are disposed in different lids covering different holes of the storage battery.

8. The storage battery assembly according to any of claims 1 to 7, wherein the controller is powered by the storage battery.

9. The storage battery assembly according to any of claims 1 to 7, wherein the controller comprises:
a voltage regulator (301) for receiving power from the storage and supplying a regulated voltage;
a RS flip-flop (300) being powered by the regulated voltage and having an input connected to the electrolyte level sensor;
a startup reset circuit (309,310, and 311) for resetting the RS flip-flop; and
a driving circuit (308) for driving the electromagnetic valve to turn on or turn off based on an output of the RS flip-flop.

10. The storage battery assembly according to claim 9, wherein the driving circuit comprises a driving transistor.

11. The storage battery assembly according to any of claims 1 to 7, wherein the electrolyte level sensor comprises a floater.

12. The storage battery assembly according to any of claims 1 to 7, wherein the preset amount of water in the water tank is set according to the amount of water lost in a lifetime of the storage battery.

13. The storage battery assembly according to claim 12, wherein the water tank is sealed after the preset amount of water is added, so that the water tank communicates only with the storage battery.

14. The storage battery assembly according to claim 13, further comprising a vent tub disposed in the storage battery so as to discharge the product gas from the storage battery to the atmosphere.

## Patentansprüche

1. Speicherbatterieanordnung, umfassend:
eine Speicherbatterie (2) und
eine Bewässerungsvorrichtung für eine Speicherbatterie, umfassend:
einen Wasserbehälter (1), der eine voreingestellte Menge Wasser enthält, das an die Speicherbatterie abgegeben werden soll, wobei der Wasserbehälter über einen Wasserzuführungsweg in Kommunikationsverbindung mit einem Inneren der Speicherbatterie steht;
ein elektromagnetisches Ventil (4), das im Wasserzuführungsweg angeordnet ist;
einen Elektrolytgehaltsensor (9), der in der Speicherbatterie angeordnet ist;
eine Steuerung (3) zum Verarbeiten erkannter Signale des Elektrolytgehaltsensors, um das elektromagnetische Ventil zum Ein- bzw. Ausschalten zu steuern, wobei, wenn der Elektrolytgehaltdetektor erkennt, dass der Elektrolytgehalt niedriger als ein unterer Grenzwert ist, die Steuerung das elektromagnetische Ventil einschaltet, um Wasser in die Speicherbatterie zuzuführen, und wenn der Elektrolytgehaltdetektor erkennt, dass der Elektrolytgehalt höher als ein oberer Grenzwert ist, schaltet die Steuerung das elektromagnetische Ventil aus, um die Wasserzufuhr zu unterbrechen,
wobei ein Druck im Wasserbehälter und ein Druck in der Speicherbatterie derart abgestimmt werden, dass das Wasser im Wasserbehälter dafür anpassbar ist, aufgrund der Schwerkrafteinwirkung in die Speicherbatterie zu fließen, wenn das elektromagnetische Ventil eingeschaltet ist,
wobei die Speicherbatteriebaugruppe gegen die Atmosphäre abgedichtet ist.

2. Speicherbatteriebaugruppe gemäß Anspruch 1, wobei der Wasserzuführungsweg ein Wasserzuführungsrohr umfasst, das in die Speicherbatterie eingesetzt ist.

3. Speicherbatteriebaugruppe gemäß Anspruch 2, wobei die Speicherbatterie ein Stapel aus mehreren Speicherbatterien ist, die jeweils mit einem Wasserbehälter, einer Steuerung, einem Elektrolytgehaltsensor und einem Wasserzuführungsrohr ausgestattet sind.

4. Speicherbatteriebaugruppe gemäß Anspruch 2, wobei die Speicherbatterie ein Stapel aus mehreren Speicherbatterien ist, die jeweils mit einem Elektrolytgehaltsensor und einem Wasserzuführungsrohr ausgestattet sind, jedoch alle einen gemeinsamen Wasserbehälter und eine gemeinsame Steuerung haben.

5. Speicherbatteriebaugruppe gemäß Anspruch 1, ferner umfassend ein in der Speicherbatterie angeordnetes Entlüftungsrohr und ein Einweg-Ventil (12), um entstehendes Gas aus der Speicherbatterie über das Entlüftungsrohr und das Einweg-Ventil in die Atmosphäre zu entlassen.

6. Speicherbatteriebaugruppe gemäß Anspruch 5, wobei das Wasserzuführungsrohr, das Entlüftungsrohr und der Elektrolytgehaltsensor in ein und demselben Deckel untergebracht sind, der eine Öffnung der Speicherbatterie bedeckt.

7. Speicherbatteriebaugruppe gemäß Anspruch 5, wobei das Wasserzuführungsrohr, das Entlüftungsrohr und der Elektrolytgehaltsensor in verschiedenen Deckeln untergebracht sind, die verschiedene Öffnungen der Speicherbatterie bedecken.

8. Speicherbatteriebaugruppe gemäß einem der Ansprüche 1 bis 7, wobei die Steuerung von der Speicherbatterie mit Strom versorgt wird.

9. Speicherbatteriebaugruppe gemäß einem der Ansprüche 1 bis 7, wobei die Steuerung umfasst:
einen Spannungsregler (301) zum Aufnehmen von Leistung aus dem Speicher und Bereitstellen einer regulierten Spannung;
ein RS-Flipflop (300), das durch die regulierte Spannung angetrieben wird und einen Eingang aufweist, der mit dem Elektrolytgehaltsensor verbunden ist;
eine Startrücksetzschaltung (309, 310 und 311) zum Rücksetzen des RS-Flipflop; und
eine Ansteuerschaltung (308) zum Ansteuern des elektromagnetischen Ventils zum Ein- bzw. Ausschalten basierend auf einem Ausgang des RS-Flipflop.

10. Speicherbatteriebaugruppe gemäß Anspruch 9, wobei die Ansteuerschaltung einen Ansteuertransistor umfasst.

11. Speicherbatteriebaugruppe gemäß einem der Ansprüche 1 bis 7, wobei der Elektrolytgehaltsensor einen Schwimmer umfasst.

12. Speicherbatteriebaugruppe gemäß einem der Ansprüche 1 bis 7, wobei die voreingestellte Wassermenge im Wasserbehälter entsprechend der Menge an Wasser festgesetzt wird, die im Laufe der Lebensdauer der Speicherbatterie verloren geht.

13. Speicherbatteriebaugruppe gemäß Anspruch 12, wobei der Wasserbehälter abgedichtet wird, nachdem die voreingestellte Menge an Wasser eingefüllt wurde, so dass der Wasserbehälter nur noch mit der Speicherbatterie in Verbindung steht.

14. Speicherbatteriebaugruppe gemäß Anspruch 13, ferner umfassend ein in der Speicherbatterie angeordnetes Entlüftungsrohr, um entstehendes Gas aus der Speicherbatterie in die Atmosphäre zu entlassen.

## Revendications

1. Ensemble de batterie d'accumulateurs comportant :
une batterie (2) d'accumulateurs, et
un dispositif de remplissage d'eau pour batterie d'accumulateurs, comportant :
un réservoir (1) d'eau contenant une quantité prédéfinie d'eau à fournir à la batterie d'accumulateurs, ledit réservoir d'eau communiquant avec un intérieur de la batterie d'accumulateurs par l'intermédiaire d'un parcours d'injection d'eau ;
une vanne électromagnétique (4) disposée sur le parcours d'injection d'eau ;
un capteur (9) de niveau d'électrolyte disposé dans la batterie d'accumulateurs ;
une commande (3) servant à traiter des signaux détectés du capteur de niveau d'électrolyte de façon à commander la mise sous tension ou hors tension de la vanne électromagnétique,
en ce que, lorsque le détecteur de niveau d'électrolyte détecte que le niveau d'électrolyte est inférieur à une limite inférieure, la commande met la vanne électromagnétique sous tension de façon à injecter de l'eau dans la batterie d'accumulateurs, et en ce que, lorsque le capteur de niveau d'électrolyte détecte que le niveau d'électrolyte est supérieur à une limite supérieure, la commande met la vanne électromagnétique hors tension de façon à arrêter d'injecter de l'eau, et la pression dans le réservoir d'eau et la pression dans la batterie d'accumulateurs étant équilibrées de telle façon que l'eau présente dans le réservoir d'eau soit apte à s'écouler jusque dans la batterie d'accumulateurs du fait de la force de gravitation dans le cas où la vanne électromagnétique est mise sous tension, l'ensemble de batterie d'accumulateurs étant isolé de l'atmosphère extérieure.

2. Ensemble de batterie d'accumulateurs selon la revendication 1, le parcours d'injection d'eau comportant un tube d'injection d'eau inséré dans la batterie d'accumulateurs.

3. Ensemble de batterie d'accumulateurs selon la revendication 2, la batterie d'accumulateurs étant un empilement d'une pluralité de batteries rechargeables, dont chacune est munie d'un réservoir d'eau, d'une commande, d'un capteur de niveau d'électrolyte et d'un tube d'injection d'eau.

4. Ensemble de batterie d'accumulateurs selon la revendication 2, la batterie d'accumulateurs étant un empilement d'une pluralité de batteries rechargeables, dont chacune est munie d'un capteur de niveau d'électrolyte et d'un tube d'injection d'eau, mais qui sont toutes dotées d'un réservoir d'eau commun et d'une commande commune.

5. Ensemble de batterie d'accumulateurs selon la revendication 1, comportant en outre un tube de mise à l'air libre disposée dans la batterie d'accumulateurs et un clapet anti-retour (12) de façon à évacuer le gaz produit de la batterie d'accumulateurs vers l'atmosphère via la cuve de mise à l'air libre et le clapet anti-retour.

6. Ensemble de batterie d'accumulateurs selon la revendication 5, le tube d'injection d'eau, le tube de mise à l'air libre et le capteur de niveau d'électrolyte étant disposés dans le même couvercle recouvrant un trou de la batterie d'accumulateurs.

7. Ensemble de batterie d'accumulateurs selon la revendication 5, le tube d'injection d'eau, le tube de mise à l'air libre et le capteur de niveau d'électrolyte étant disposés dans différents couvercles recouvrant différents trous de la batterie d'accumulateurs.

8. Ensemble de batterie d'accumulateurs selon l'une quelconque des revendications 1 à 7, la commande étant alimentée par la batterie d'accumulateurs.

9. Ensemble de batterie d'accumulateurs selon l'une quelconque des revendications 1 à 7, la commande comportant :
un régulateur (301) de tension servant à recevoir une alimentation en provenance de l'accumulateur et à fournir une tension régulée ;
une bascule RS (300) alimentée par la tension régulée et dotée d'une entrée reliée au capteur de niveau d'électrolyte ;
un circuit (309, 310 et 311) de remise à zéro au démarrage servant à remettre la bascule RS à zéro ; et
un circuit (308) d'attaque servant à attaquer la vanne électromagnétique pour la mettre sous tension ou hors tension d'après une sortie de la bascule RS.

10. Ensemble de batterie d'accumulateurs selon la revendication 9, le circuit d'attaque comportant un transistor d'attaque.

11. Ensemble de batterie d'accumulateurs selon l'une quelconque des revendications 1 à 7, le capteur de niveau d'électrolyte comportant un flotteur.

12. Ensemble de batterie d'accumulateurs selon l'une quelconque des revendications 1 à 7, la quantité prédéfinie d'eau dans le réservoir d'eau étant spécifiée en fonction de la quantité d'eau perdue au cours de la durée de vie de la batterie d'accumulateurs.

13. Ensemble de batterie d'accumulateurs selon la revendication 12, le réservoir d'eau étant isolé après que la quantité prédéfinie d'eau a été ajoutée, de telle façon que le réservoir d'eau ne communique qu'avec la batterie d'accumulateurs.

14. Ensemble de batterie d'accumulateurs selon la revendication 13, comportant en outre un tube de mise à l'air libre disposée dans la batterie d'accumulateurs de façon à évacuer le gaz produit de la batterie d'accumulateurs vers l'atmosphère.
